# EUROPEAN PATENT APPLICATION

(11) **EP 4 407 552 A1**
(43) Date of publication of application: **31.07.2024**
(21) Application number: 22872615.4
(22) Date of filing: 19.08.2022
(51) Int. Cl.: G06T 1/00

(54) **INFORMATION PROCESSING DEVICE, METHOD AND PROGRAM, AND IMAGE DATA STRUCTURE**

(30) Priority: 22.09.2021 JP 2021154105
(71) Applicant: FUJIFILM Corporation, Tokyo 106-8620 (JP)
(72) Inventor: YONAHA Makoto, Tokyo 106-8620 (JP)
(74) Representative: Meissner Bolte Partnerschaft mbB
(86) International application number: PCT/JP2022/031372
(87) International publication number: WO 2023/047859

(57) **Abstract**

Provided are an information processing apparatus, method, and program, and an image data structure capable of easily extracting a desired image. An image group obtained by capturing an object with overlapping imaging ranges is acquired. Composition processing is performed on the acquired image group. The same identification information is assigned to images of the same imaging target based on a result of the composition processing. The assigned identification information is attached to the images as accessory information. Accordingly, a search for an image using the accessory information as a search key is possible.

## Description

### BACKGROUND OF THE INVENTION

### 1. Field of the Invention

The present invention relates to an information processing apparatus, method, and program, and an image data structure, and particularly to an information processing apparatus, method, and program, and an image data structure for processing an image group captured for a structure formed of a plurality of members.

### 2. Description of the Related Art

Structures such as a bridge and a tunnel are periodically inspected.
In a case where the inspection is performed, a report (for example, an inspection report) indicating a result of the inspection is created. In a case of a structure formed of a plurality of members, such as a bridge, a report may be created by illustrating an appropriate image (photograph) for each member.

JP2020-160944A discloses a technique of generating a three dimensional model of a structure from an image group obtained by divisionally imaging the structure and selecting an image to be used for a report using the three dimensional model.

### SUMMARY OF THE INVENTION

However, in the case of a configuration in which an image is selected using a three dimensional model as in JP2020-160944A, there is a disadvantage in that three dimensional model data having link information to an image is required, and definition of a unique data format is required.

The present invention has been made in view of such circumstances, and an object of the present invention is to provide an information processing apparatus, method, and program, and an image data structure capable of easily searching for a desired image.
(1) An information processing apparatus comprising: a processor, in which the processor acquires an image group captured with overlapping imaging ranges, performs composition processing on the acquired image group, and assigns the same identification information to images of the same imaging target based on a result of the composition processing, and attaches the identification information to the images as accessory information.
(2) The information processing apparatus according to (1), in which the processor performs panorama composition processing on the acquired image group, and assigns the same identification information to images constituting a composite region, and attaches the identification information to the images as the accessory information.
(3) The information processing apparatus according to (2), in which the processor further acquires information on the region, and assigns information for specifying the region as the identification information.
(4) The information processing apparatus according to (1), in which the processor performs three dimensional composition processing on the acquired image group, extracts regions constituting the same surface of an object from a result of the three dimensional composition processing, and assigns the same identification information to images constituting the extracted regions, and attaches the identification information to the images as the accessory information.
(5) The information processing apparatus according to (4), in which the processor further acquires information on the region, and assigns information for specifying the region as the identification information.
(6) The information processing apparatus according to (1), in which the processor performs three dimensional composition processing on the acquired image group, extracts regions of the same member of an object from a result of the three dimensional composition processing, and assigns the same identification information to images constituting the extracted regions, and attaches the identification information to the images as the accessory information.
(7) The information processing apparatus according to any one of (1) to (6), in which the processor further acquires information on a result of image analysis for the image, and adds the acquired information on the result of the image analysis to the accessory information to be attached to the image.
(8) The information processing apparatus according to (7), in which the information on the result of the image analysis includes at least one of information on a detection result by the image analysis, information on a type determination result by the image analysis, or information on a measurement result by the image analysis.
(9) The information processing apparatus according to (8), in which the information on the detection result by the image analysis includes at least one of information on a detection result of a defect or information on a detection result of a damage.
(10) The information processing apparatus according to (8) or (9), in which the information on the type determination result by the image analysis includes at least one of information on a defect type determination result or information on a damage type determination result.
(11) The information processing apparatus according to any one of (8) to (10), in which the information on the measurement result by the image analysis includes at least one of information on a measurement result related to a size of a defect, information on a measurement result related to a size of a damage, information on a measurement result related to a shape of the defect, or information on a measurement result related to a shape of the damage.
(12) The information processing apparatus according to any one of (1) to (11), in which the accessory information is used for searching for the image.
(13) An information processing method comprising: acquiring an image group captured with overlapping imaging ranges; performing composition processing on the acquired image group; and assigning the same identification information to images of the same imaging target based on a result of the composition processing, and attaching the identification information to the images as accessory information.
(14) An information processing program causing a computer to realize: acquiring an image group captured with overlapping imaging ranges; performing composition processing on the acquired image group; and assigning the same identification information to images of the same imaging target based on a result of the composition processing, and attaching the identification information to the images as accessory information.
(15) An image data structure comprising: an image; and accessory information, in which the accessory information includes identification information for identifying an imaging target.
(16) The image data structure according to (15), in which the accessory information further includes information on a result of image analysis for the image.
(17) The image data structure according to (15) or (16), in which the accessory information is used for searching for the image.

According to the present invention, it is possible to simply search for a desired image.

### BRIEF DESCRIPTION OF THE DRAWINGS

Fig. 1 is a diagram showing an example of a hardware configuration of an inspection support apparatus.
Fig. 2 is a block diagram of main functions of the inspection support apparatus.
Fig. 3 is a conceptual diagram of a data structure of an image file attached with an identification ID.
Fig. 4 is a diagram showing a schematic configuration of a deck slab.
Fig. 5 is a diagram showing an example of a procedure for imaging a panel.
Fig. 6 is a flowchart showing a procedure for processing of creating a damage diagram, and assigning and recording an identification ID.
Fig. 7 is a diagram showing an example of an image subj ected to panorama composition processing.
Fig. 8 shows an example of a damage diagram.
Fig. 9 is a conceptual diagram of assignment of an identification ID.
Fig. 10 is a block diagram of main functions of the inspection support apparatus in a case where a user inputs information on an identification ID to be assigned to an image.
Fig. 11 is a conceptual diagram of a data structure of an image file attached with an analysis result.
Fig. 12 is a block diagram of main functions of an inspection support apparatus.
Fig. 13 is a block diagram of functions of a three dimensional composition processing unit.
Fig. 14 is a diagram showing an example of a three dimensional model.
Fig. 15 is a diagram showing an example of an extraction result of regions constituting the same surface.
Fig. 16 is a conceptual diagram of assignment of an identification ID.
Fig. 17 is a flowchart showing a procedure for processing of generating a three dimensional model, and assigning and recording an identification ID.
Fig. 18 is a block diagram of main functions of the inspection support apparatus in a case where a user inputs information on an identification ID to be assigned to an image.
Fig. 19 is a block diagram of main functions of an inspection support apparatus.
Fig. 20 is a diagram showing an example of an identification result of a member.
Fig. 21 is a conceptual diagram of assignment of an identification ID.
Fig. 22 is a flowchart showing a procedure for processing of generating a three dimensional model, and assigning and recording an identification ID.

### DESCRIPTION OF THE PREFERRED EMBODIMENTS

Hereinafter, preferred embodiments of the present invention will be described with reference to the accompanying drawings.

### [First Embodiment]

### [Overview]

In a case where there are many images, an information processing apparatus according to the present embodiment assigns the same identification ID (identity/identification) to images of the same imaging target, and makes it possible to search for a desired image using the identification ID. For example, the information processing apparatus assigns the same identification ID to images obtained by imaging the same member, and makes it possible to search for an image in units of members.

In the present embodiment, in a case where the information processing apparatus acquires an image group obtained by divisionally imaging one plane of a structure and performs panorama composition, the information processing apparatus assigns the same identification ID to images constituting a composite region. That is, the information processing apparatus regards the images constituting the composite region as images obtained by imaging the same surface of the same member, and assigns the same identification ID to the images.

Hereinafter, a case where the present invention is applied to an inspection support apparatus will be described as an example. The inspection support apparatus acquires an image group obtained by divisionally imaging one plane of a structure as an inspection target, performs panorama composition processing on the acquired image group, and analyzes each image to automatically extract a damage. Then, the inspection support apparatus automatically creates a damage diagram on the basis of information on the extracted damage and the panorama composite image. The damage diagram is a diagram showing a damaged state of the structure. The division imaging refers to performing imaging by dividing a target into a plurality of regions. In the division imaging, imaging is performed by overlapping imaging ranges between adjacent images so that the images after the imaging can be combined.

### [Configuration of Inspection Support Apparatus]

As described above, the inspection support apparatus of the present embodiment is configured as an apparatus that acquires an image group obtained by divisionally imaging one plane of a structure and automatically generates a damage diagram on the basis of the acquired image group.

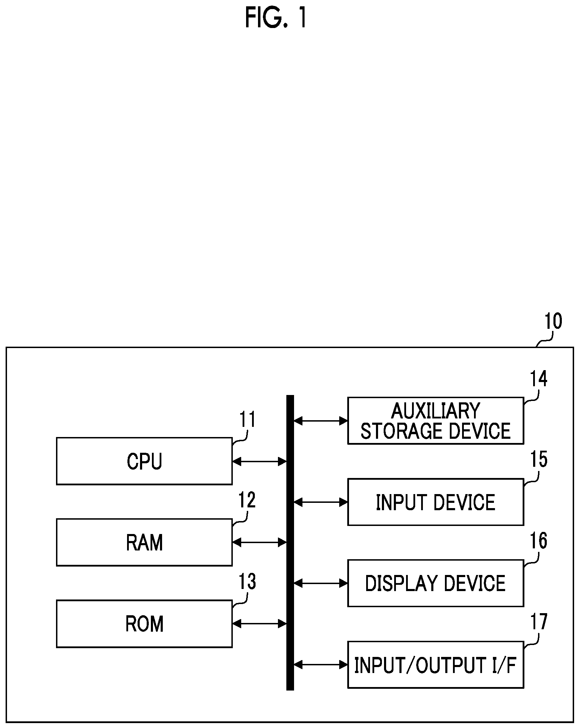

Fig. 1 is a diagram showing an example of a hardware configuration of the inspection support apparatus.

As shown in Fig. 1, the inspection support apparatus 10 is configured of a computer comprising a central processing unit (CPU) 11, a random access memory (RAM) 12, a read only memory (ROM) 13, an auxiliary storage device 14, an input device 15, a display device 16, an input/output interface (I/F) 17, and the like. The inspection support apparatus 10 is an example of an information processing apparatus.

The auxiliary storage device 14 is configured of, for example, a hard disk drive (HDD), a solid state drive (SSD), or the like. The auxiliary storage device 14 stores a program (information processing program) to be executed by the CPU 11 and data required for processing. The input device 15 is configured of, for example, a keyboard, a mouse, and a touch panel. The display device 16 is configured of, for example, a display such as a liquid crystal display or an organic light emitting diode display (organic EL display).

The image group obtained by divisionally imaging the structure to be inspected is taken into the inspection support apparatus 10 through the input/output interface 17. The structure to be inspected is an example of an object.

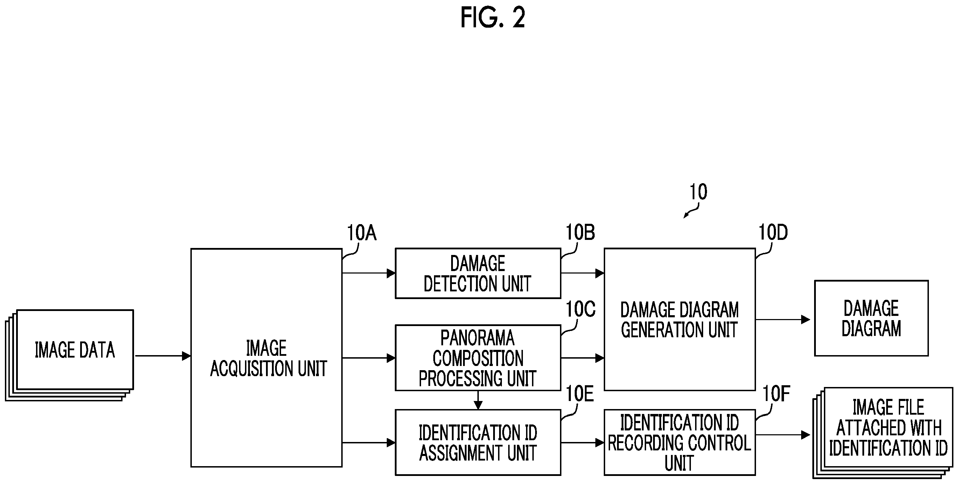

Fig. 2 is a block diagram of main functions of the inspection support apparatus.

As shown in Fig. 2, the inspection support apparatus 10 has functions of an image acquisition unit 10A, a damage detection unit 10B, a panorama composition processing unit 10C, a damage diagram generation unit 10D, an identification ID assignment unit 10E, an identification ID recording control unit 10F, and the like. These functions are realized by the CPU 11 executing a predetermined program (information processing program).

The image acquisition unit 10A performs a process of acquiring an image group obtained by divisionally imaging the structure. As described above, the image group obtained by divisionally imaging the structure to be inspected is taken into the inspection support apparatus 10 through the input/output interface 17.

The damage detection unit 10B analyzes each image acquired by the image acquisition unit 10A and detects a damage. A known method can be employed for the detection of the damage by image analysis. For example, a method of detecting the damage using a trained model (recognizer) can be employed. An algorithm of machine learning for generating the recognizer is not particularly limited. For example, an algorithm using a neural network such as a recurrent neural network (RNN), a convolutional neural network (CNN), or a multilayer perceptron (MLP) can be employed. Information on the detected damage is stored in association with an image of a detection source. As an example, in the present embodiment, fissuring (marking in a case where fissuring is marked) is detected as the damage.

The panorama composition processing unit 10C performs a process of performing panorama composition of the image group obtained by the division imaging. Since the panorama composition itself is a known technique, a detailed description thereof will be omitted. For example, the panorama composition processing unit 10C detects correspondence points between the images and combines the image group obtained by the division imaging. In this case, the panorama composition processing unit 10C performs correction such as enlargement and reduction correction, tilt correction, and rotation correction on each image as necessary.

In a case where an inspection location is divided and imaged, an imaging person (inspection technician) images the inspection location such that adjacent images overlap each other. A method of the imaging will be described below.

The damage diagram generation unit 10D performs a process of creating a damage diagram. In the present embodiment, the damage diagram generation unit 10D generates an image in which the damage is traced on the panorama composite image, as a damage diagram. The damage diagram generation unit 10D generates the damage diagram on the basis of a processing result of the panorama composition and a detection result of the damage. Since the technique itself of automatically generating the damage diagram is a known technique, a detailed description thereof will be omitted.

The generated damage diagram is output to the display device 16. The generated damage diagram is stored in the auxiliary storage device 14 in accordance with an instruction from a user.

The identification ID assignment unit 10E performs a process of assigning an identification ID to the image group acquired by the image acquisition unit 10A on the basis of the processing result of the panorama composition. Specifically, the identification ID assignment unit 10E assigns the same identification ID to the images constituting the composite region. The images constituting the composite region are considered as images obtained by imaging the same surface of the same member. Thus, the same identification ID is assigned to the images of the same imaging target. The identification ID is an example of identification information. The identification ID assignment unit 10E generates the identification ID in accordance with a predetermined generation rule, and assigns the identification ID. For example, the identification ID assignment unit 10E configures the identification ID with a four-digit number, and generates the identification ID by incrementing the numbers in order from "0001" to assign the identification ID.

As described above, the same identification ID is assigned to the images constituting the composite region. Thus, the identification ID is not assigned to images that are not combined. Predetermined information may be assigned to the images that are not combined so that the images can be distinguished from other images.

The identification ID recording control unit 10F attaches the identification ID assigned to each image by the identification ID assignment unit 10E to the image as accessory information (metadata). Specifically, the identification ID recording control unit 10F adds the assigned identification ID to image data of each image as accessory information, and shapes the image data according to a format of an image file. For example, an exchangeable image file format (Exif) can be employed as the format of the image file.

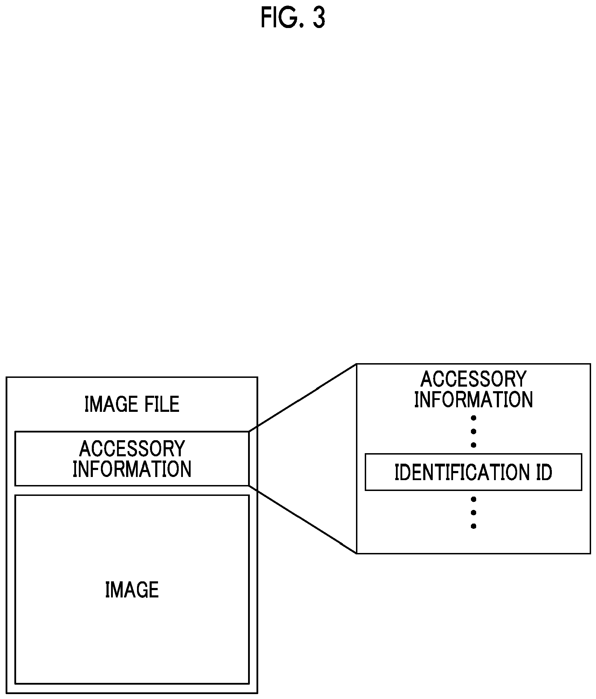

Fig. 3 is a conceptual diagram of a data structure of an image file attached with an identification ID.

As shown in Fig. 3, the image file includes image data and accessory information. The accessory information includes information on the identification ID.

In a case where Exif is employed as a file format, the identification ID is recorded in MakerNotes, for example.

### [Action of Inspection Support Apparatus]

Next, a creation method of the damage diagram and an assignment method and a recording method (information processing method) of the identification ID using the inspection support apparatus 10 of the present embodiment will be described.

Here, a case where a bridge, particularly, a deck slab is inspected will be described as an example.

The bridge is configured of parts such as an upper structure, a lower structure, a bearing part, a road, a drainage facility, an inspection facility, an abutment, and a sleeve retaining wall. Each part is formed of a plurality of members. For example, the upper structure is configured of members such as a main girder, a main girder cantilever portion, a cross girder, a stringer, a deck slab, a sway brace, a lateral brace, an outer cable, and a prestressed concrete (PC) anchoring portion. The lower structure is configured of members such as a bridge pier (column portion, wall portion, beam portion, corner portion, and joint portion), an abutment (chest wall, vertical wall, and blade wall), and a foundation. The bearing part is configured of a bearing body, an anchor bolt, a bridge fall prevention system, a shoe seat mortar, seat concrete, and the like. The road is configured of members such as a balustrade, a guard fence, a wheel guard, a median strip, an expansion device, a sound insulation facility, a lighting facility, a signage facility, a curb, and a pavement. The drainage facility is configured of members such as a drainage pit and a drainage pipe.

In the present embodiment, the bridge is an example of an object. The deck slab is an example of a member.

### [Inspection of Deck Slab]

First, the inspection target (deck slab) is imaged on site. Then, the damage diagram is created based on the image group obtained by the imaging. In the present embodiment, an identification ID is further assigned to each image obtained by the imaging.

### [Deck Slab]

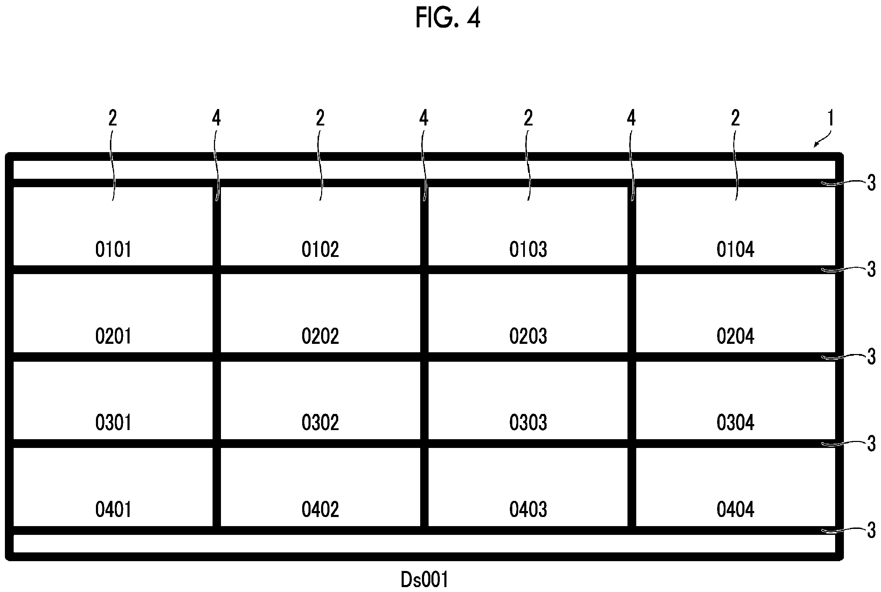

Fig. 4 is a diagram showing a schematic configuration of a deck slab.

Generally, a deck slab 1 is inspected for each panel 2. The panel 2 is one compartment of the deck slab 1, which is partitioned by a main girder 3 and a cross girder 4. In the present embodiment, the deck slab 1 and the panel 2 are examples of regions constituting the same surface.

In Fig. 4, the number (Ds001) assigned to the deck slab 1 is information for identifying the deck slab 1. The numbers (0101, 0102, ...) assigned to each panel 2 are information for identifying each panel 2.

### [Imaging]

In the present embodiment, the panel 2 is divisionally imaged. That is, the panel 2 is divided into a plurality of regions and imaged a plurality of times.

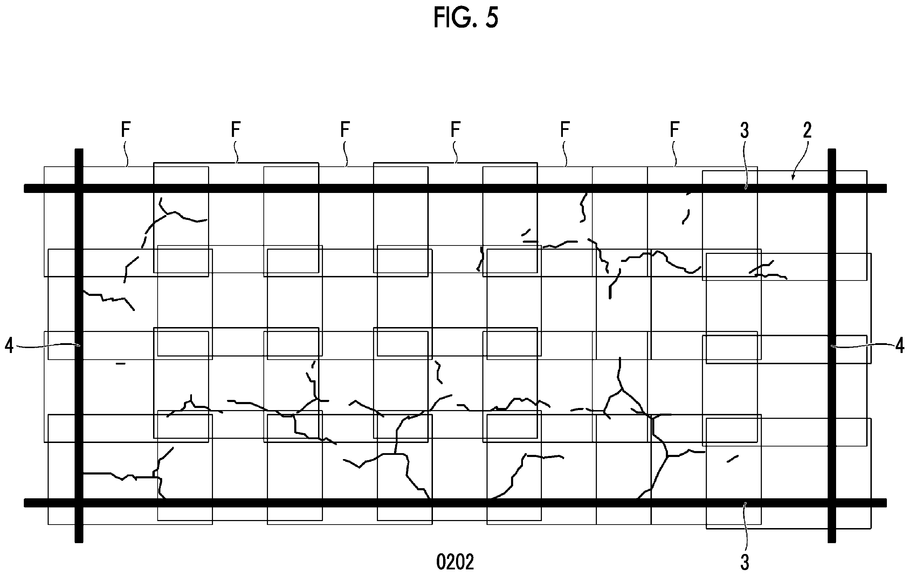

Fig. 5 is a diagram showing an example of a procedure for imaging a panel.

In Fig. 5, a reference numeral F is a frame indicating an imaging range. The imaging person (inspection technician) faces a deck slab that is a surface of an inspection target, and performs imaging from a certain distance. In addition, the imaging person performs imaging such that adjacent imaging regions partially overlap each other (for example, performs imaging with 30% or more overlap). Accordingly, the panorama composition processing unit 10C can perform composition with high accuracy in panorama composition of the captured images.

### [Creation of Damage Diagram, and Assignment and Recording of Identification ID]

Here, a case where a damage diagram is created for one panel will be described as an example.

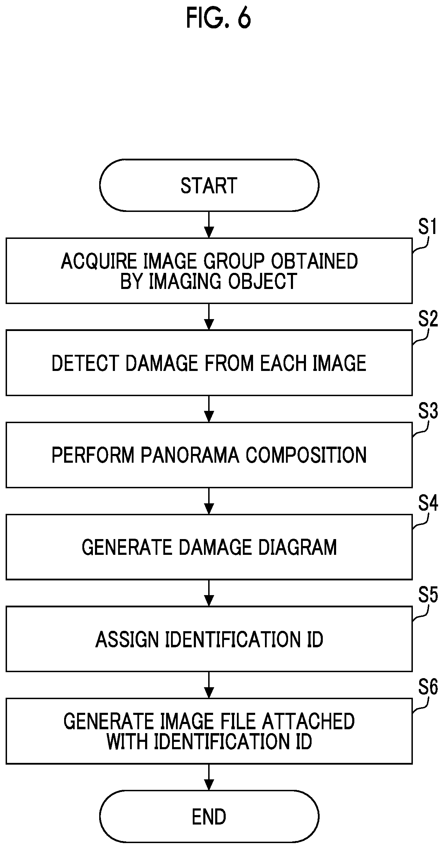

Fig. 6 is a flowchart showing a procedure for processing of creating a damage diagram, and assigning and recording an identification ID.

First, an image obtained by imaging an object to be inspected is acquired (step S1). In the present embodiment, an image group obtained by divisionally imaging one panel 2 of the deck slab 1 is acquired.

Next, each acquired image is analyzed, and a damage appearing on a surface of the object is detected (step S2). In the present exemplary embodiment, fissuring is detected as the damage.

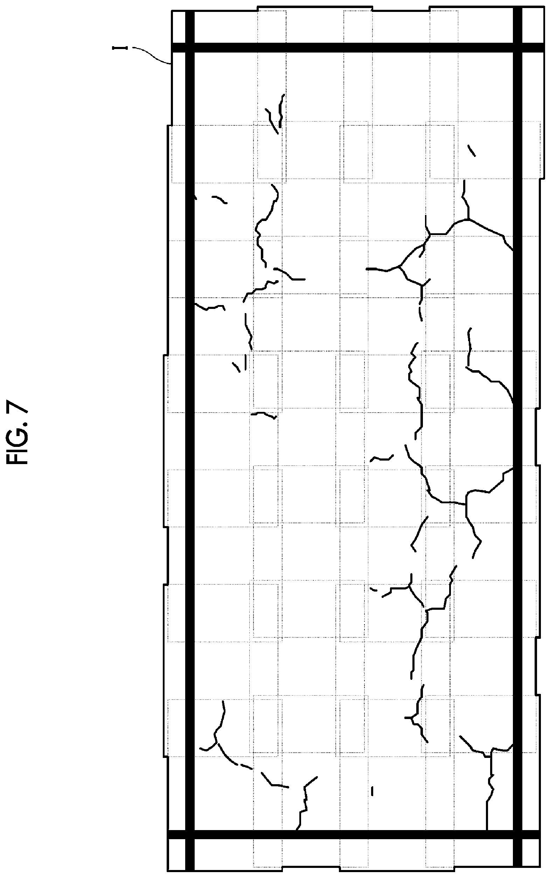

Next, the acquired image group is subjected to panorama composition processing (step S3). Fig. 7 is a diagram showing an example of an image subjected to panorama composition processing. As shown in Fig. 7, an image I showing the entire panel is generated by the panorama composition processing.

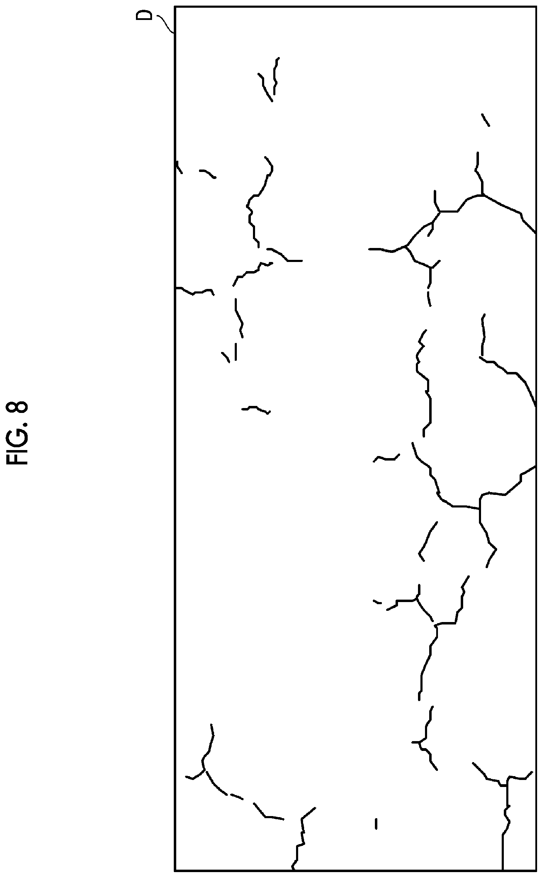

Next, a damage diagram is created based on the panorama composite image I and the detection result of the damage for each image (step S4). Fig. 8 is a diagram showing an example of a damage diagram. As shown in Fig. 8, in the present embodiment, a damage diagram D is generated as a diagram in which a damage is traced from the panorama composite image I. The generated damage diagram D is stored in the auxiliary storage device 14. The generated damage diagram D is displayed on the display device 16 as necessary.

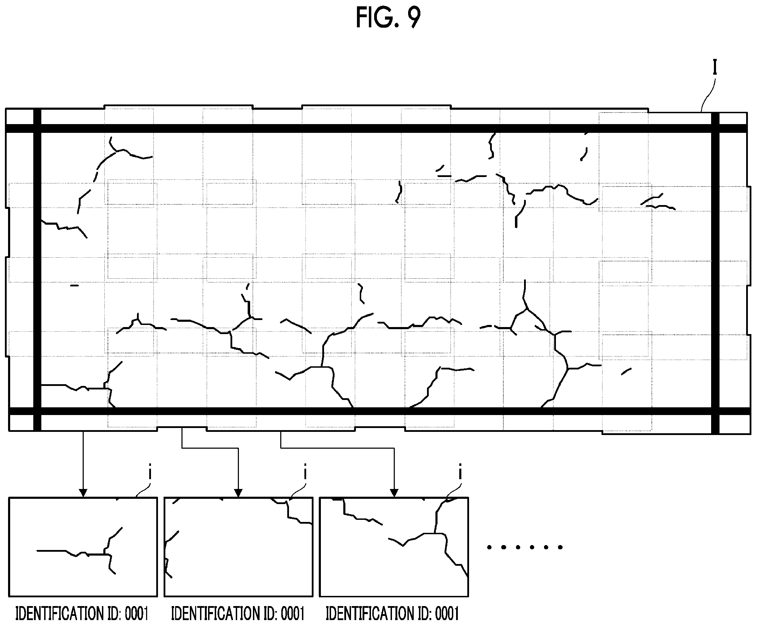

Next, an identification ID is assigned to each image based on the result of the panorama composition processing (step S5). Fig. 9 is a conceptual diagram of the assignment of the identification ID. As illustrated in Fig. 9, the same identification ID is assigned to individual images i constituting the image of one panel. In the example shown in Fig. 9, "0001" is assigned as the identification ID.

Next, an image file attached with the assigned identification ID is generated (step S6). That is, the image file including information on the identification ID in the accessory information (metadata) is generated (see Fig. 3). The generated image file is stored in the auxiliary storage device 14.

As described above, according to the inspection support apparatus 10 of the present embodiment, an identification ID is assigned to each image. The identification ID is assigned using the result of the panorama composition processing, and the same identification ID is assigned to the images of the same imaging target. The assigned identification ID is attached to the images as accessory information. Accordingly, it is possible to search for an image using only the accessory information. That is, it is possible to extract images of the same imaging target using only the accessory information. Thus, in a case where the inspection technician creates a report or the like to which an image is attached, the work can be facilitated.

### [Modification Example]

### [Generation of Identification ID]

Although it has been described in the aforementioned embodiment that an identification ID is automatically generated in accordance with a predetermined generation rule, the method of generating an identification ID to be assigned to an image is not limited thereto. For example, the user (inspection technician) may input the identification ID to be assigned to the image.

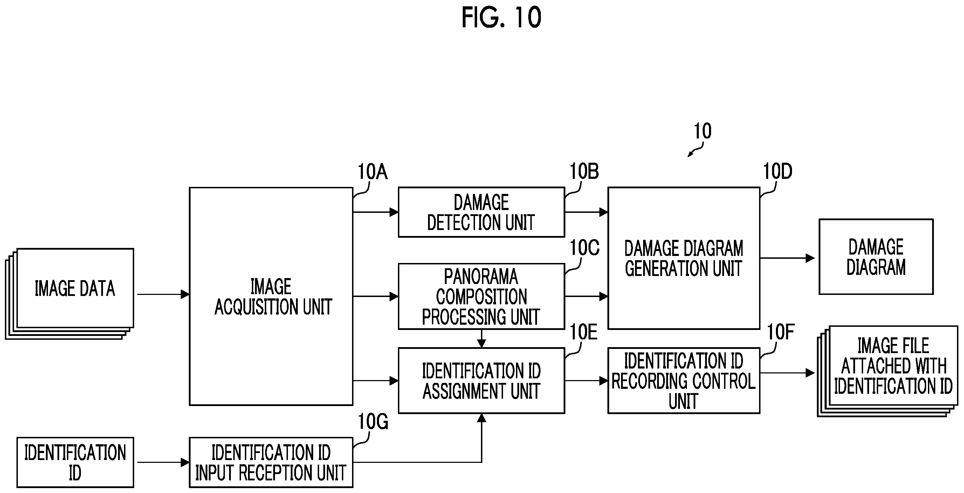

Fig. 10 is a block diagram of main functions of the inspection support apparatus in a case where the user inputs information on an identification ID to be assigned to an image.

As shown in Fig. 10, the inspection support apparatus 10 of the present example further has a function of an identification ID input reception unit 10G. The identification ID input reception unit 10G performs a process of receiving input of the identification ID to be assigned to the image. As an example, the identification ID input reception unit 10G receives input of information on the identification ID from the input device 15. In a case where the user inputs the image group to be processed to the inspection support apparatus 10, the user inputs information on the identification ID to be assigned from the input device 15. The acquired information on the identification ID is added to the identification ID assignment unit 10E. In a case of assigning the identification ID, the identification ID assignment unit 10E assigns the identification ID input by the user.

As described above, the user may input the identification ID to be assigned to the image. As the identification ID to be assigned to the image, for example, identification information assigned to each member is preferably used. Accordingly, the user can search for an image for each member. For example, in a case of a deck slab, information obtained by combining identification information assigned to each deck slab and identification information assigned to a panel constituting each deck slab can be used as the identification information. For example, in a case where a panel with identification information "0202" is a target in a deck slab with identification information "Ds001", "Ds001-0202" is assigned as the identification ID. Thus, the target image group can be extracted more easily. For example, it is possible to perform search in deck slab units using the identification information of the deck slab and search in panel units using the identification information of the panel.

### [Information to be Attached to Image]

Although it has been described in the aforementioned embodiment that only the identification information is attached, other information may be attached. For example, the result of the image analysis can be attached. For example, in a case of the above-described embodiment, information on the detection result of the damage (fissuring) can be attached. In this case, for example, information on the presence or absence of the damage is attached.

Here, the image analysis performed on the acquired image includes detection of a defect and the like in addition to the detection of the damage. In a case where the damage and/or the defect is detected, a type of the damage and/or the defect may be determined by image analysis. In addition, a size (length, width, area, or the like) of the damage and/or the defect may be measured by image analysis. Further, a shape of the damage and/or the defect may be measured by image analysis. Since performing these processes by image analysis is a known technique in itself, a detailed description thereof will be omitted.

In a case where the process of determining the type of damage and/or the defect is performed by the image analysis, information on the determination result (type determination result) may be attached to the image.

Similarly, in a case where the size of the damage and/or the defect is measured by the image analysis, information on the measurement result may be attached to the image.

In a case where the shape of the damage and/or the defect is measured by the image analysis, information on the measurement result may be attached to the image.

For example, in a case of a concrete member, the damage includes fissuring, peeling, reinforcement exposure, water leakage, free lime, falling, deck slab fissuring, delamination, and the like. In addition, in a case of a steel member, corrosion, cracking, loosening, falling, fracture, deterioration of an anticorrosion function, and the like are included. In addition, examples of the damage common to each member include a damage to repair and a reinforcing material, an abnormality of an anchoring portion, discoloration, deterioration, water leakage, water stagnation, abnormal deflection, deformation, defect, earth and sand clogging, settlement, movement, inclination, scouring, and the like. In addition, the damage includes an abnormality of an expansion gap, unevenness of a road surface, an abnormality of a pavement, a functional disorder of a bearing part, and the like.

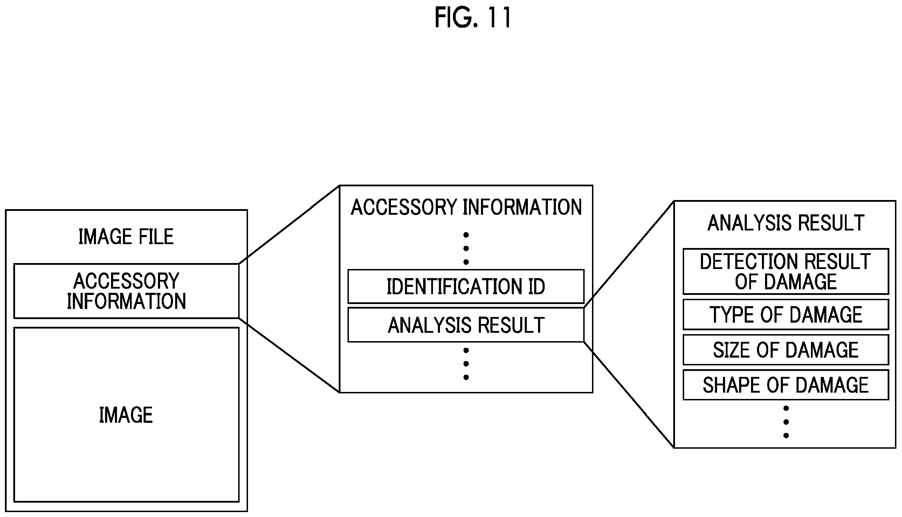

Fig. 11 is a conceptual diagram of a data structure of an image file attached with the analysis result.

As shown in Fig. 11, the accessory information attached to the image data includes the identification ID and the information on the analysis result. In the example shown in Fig. 11, information on the detection result of the damage (presence or absence of damage), the type of the damage (for example, fissuring, peeling, reinforcement exposure, water leakage, free lime, delamination, and discoloration), the size of the damage (for example, in a case of fissuring, a width and length thereof), and the shape of the damage (for example, in a case of fissuring, a pattern of fissuring) is attached as the analysis result.

As described above, by attaching the information on the analysis result, it is possible to perform image search using the information on the analysis result as a search key. Accordingly, a target image can be more simply extracted.

### [Second Embodiment]

In recent years, an attempt has been made to generate a three dimensional model of an object and three dimensionally record a position of a damage or the like with respect to inspection or the like of a structure. In an inspection or the like using an image, a three dimensional model is generated by performing three dimensional composition processing on an image obtained by imaging the object.

In an inspection support apparatus of the present embodiment, an identification ID is assigned to an image using a result of the three dimensional composition processing. A hardware configuration is the same as that of the inspection support apparatus of the first embodiment. Therefore, only a function relating to the assignment of the identification ID will be described here.

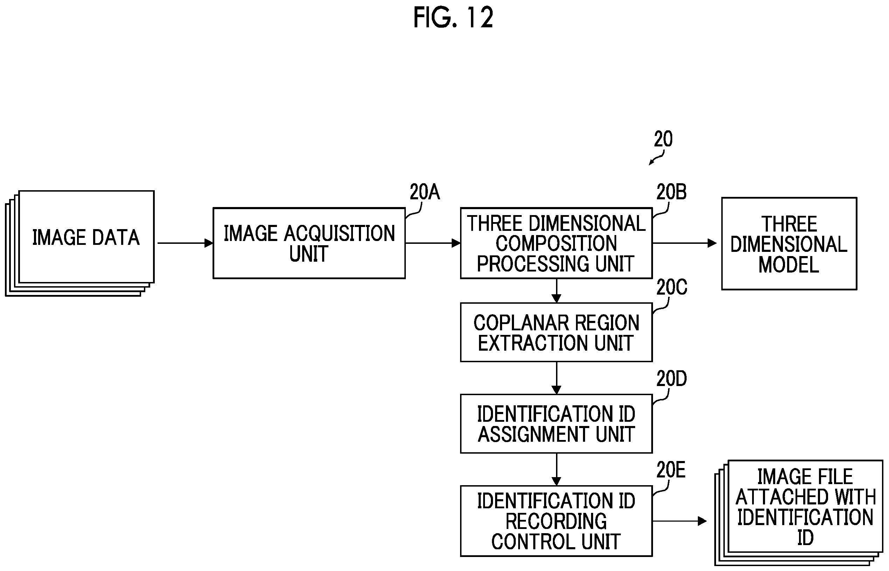

Fig. 12 is a block diagram of main functions of the inspection support apparatus of the present embodiment.

An inspection support apparatus 20 of the present embodiment has functions of an image acquisition unit 20A, a three dimensional composition processing unit 20B, a coplanar region extraction unit 20C, an identification ID assignment unit 20D, an identification ID recording control unit 20E, and the like. Each function is realized by the CPU executing a predetermined program.

The image acquisition unit 20A performs a process of acquiring an image group obtained by divisionally imaging the structure. As described above, in the present embodiment, the inspection support apparatus generates a three dimensional model of an object from an image. Accordingly, an image group capable of generating the three dimensional model of the object is acquired. As will be described below, in the present embodiment, the inspection support apparatus generates the three dimensional model of the object by using a structure-from-motion (SfM) technique. In this case, a so-called multi-view image is required. The multi-view image is an image group obtained by imaging the object from a plurality of viewpoints with overlapping imaging ranges.

The three dimensional composition processing unit 20B performs a process of generating the three dimensional model of the object by performing three dimensional composition processing using the acquired image group.

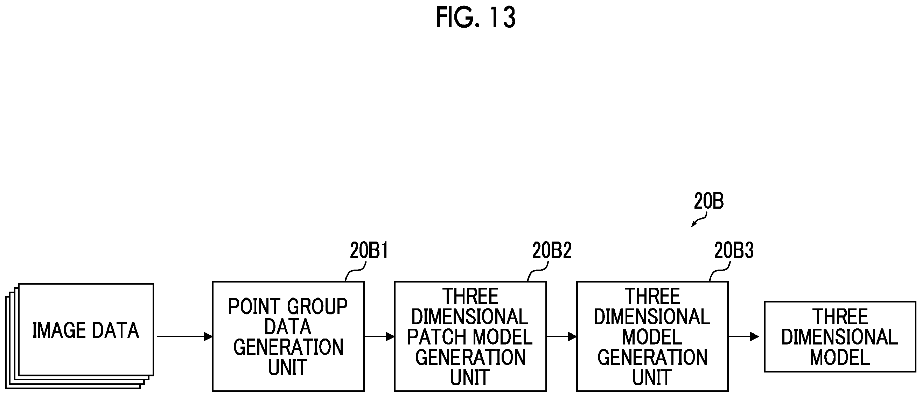

Fig. 13 is a block diagram of functions of the three dimensional composition processing unit.

As shown in Fig. 13, the three dimensional composition processing unit 20B has functions of a point group data generation unit 20B 1, a three dimensional patch model generation unit 20B2, and a three dimensional model generation unit 20B3.

The point group data generation unit 20B 1 performs a process of analyzing the image group acquired by the image acquisition unit 20A and generating three dimensional point group data of feature points. In the present embodiment, the point group data generation unit 20B 1 performs this process using SfM and multi-view stereo (MVS) techniques.

The SfM is a technique of performing "estimation of a captured position and orientation" and "three dimensional restoration of feature points" from a plurality of images captured by a camera. The SfM itself is a known technique. The outline of the process is as follows. First, a plurality of images (image group) to be processed are acquired. Next, feature points are detected from each acquired image. Then, by comparing feature points of a pair of two images, matching feature points are detected as correspondence points. That is, feature point matching is performed. Next, camera parameters (for example, a basic matrix, a base matrix, internal parameters, and the like) of a camera that has captured the pair of two images are estimated from the detected correspondence points. Next, the imaging position and orientation are estimated based on the estimated camera parameters. Further, three dimensional positions of the feature points of the object are obtained. That is, three dimensional restoration of the feature points is performed. Thereafter, bundle adjustment is performed as necessary. That is, coordinates of a three dimensional point group, camera internal parameters (focal length and principal point), and camera external parameters (position and rotation) are adjusted such that a reprojection error of a point group (point cloud), which is a set of the feature points in three dimensional coordinates, onto the camera is minimized.

The three dimensional points restored by the SfM are specific three dimensional points and are sparse. A general three dimensional model is mainly composed of textures with a low feature amount (for example, a wall or the like). MVS attempts to restore the three dimensional textures with a low feature amount, which occupy most of the three dimensional model. The MVS generates a dense point group using the "imaging position and orientation" estimated by the SfM. The MVS itself is a known technique. Therefore, a detailed description thereof will be omitted.

The restored shape and the imaging position obtained by the SfM are a point group represented by non-dimensional coordinate values. Therefore, the shape cannot be quantitatively grasped with the obtained restored shape as it is. Therefore, it is necessary to give physical dimensions (actual dimensions). A known technique is employed for this process. For example, a technique of extracting a reference point (for example, a ground control point) from the image and assigning a physical dimension can be employed. A ground control point (GCP) is a mark including visible geospatial information (latitude, longitude, and altitude) in a captured image. Therefore, in this case, it is necessary to set the reference point at the stage of imaging. In addition, in a case where distance measurement information is associated with the captured image, the physical dimension can be assigned using the distance measurement information. For example, in a case where the object is imaged by using an unmanned aerial vehicle (UAV) such as a drone, and a camera and light detection and ranging or laser imaging detection and ranging (LIDAR) are mounted on the unmanned aerial vehicle to perform imaging, distance measurement information by the LIDAR can be acquired together with the image. By using the distance measurement information, information on the physical dimension can be assigned to the three dimensional point group data obtained by the SfM. In addition, it is possible to extract an object whose physical dimension is known from the image and give the physical dimension.

The three dimensional patch model generation unit 20B2 performs a process of generating a three dimensional patch model of the object based on the three dimensional point group data of the object generated by the point group data generation unit 20B 1. Specifically, the three dimensional patch model generation unit 20B2 generates a patch (mesh) from the generated three dimensional point group, and generates a three dimensional patch model. Thus, the relief of the surface can be represented with a small number of points. This process is performed using, for example, a known technique such as three dimensional Delaunay triangulation. Accordingly, a detailed description thereof will be omitted. As an example, in the present embodiment, the three dimensional patch model generation unit 20B2 generates a triangular irregular network (TIN) model using three dimensional Delaunay triangulation. In the TIN model, a surface is represented by a set of triangles. That is, a patch is generated by a triangular mesh.

The three dimensional model generation unit 20B3 performs texture mapping on the three dimensional patch model generated by the three dimensional patch model generation unit 20B2 to generate a three dimensional model assigned with textures. This process is performed by interpolating a space in each patch of the three dimensional patch model with the captured image. As described above, in the inspection support apparatus 20 of the present embodiment, the processing of the SfM and MVS is performed by the point group data generation unit 20B1. By the processing of the SfM and the MVS, an image obtained by imaging a region corresponding to each patch and a corresponding position in the image are known. Therefore, in a case where vertices of the generation surface can be observed, textures to be assigned to the surface can be associated. The three dimensional model generation unit 20B3 selects an image corresponding to each patch, and extracts an image of a region corresponding to the patch from the selected image as a texture. Specifically, the three dimensional model generation unit 20B3 projects vertices of the patch onto the selected image, and extracts an image of a region surrounded by the projected vertices as a texture. The three dimensional model generation unit 20B3 generates a three dimensional model by assigning the extracted texture to the patch. That is, the three dimensional model generation unit 20B3 generates a three dimensional model by interpolating the space in the patch with the extracted texture. By assigning the texture to each patch, color information is added to each patch. In a case where a damage such as fissuring exists in the object, the damage is displayed at a corresponding position.

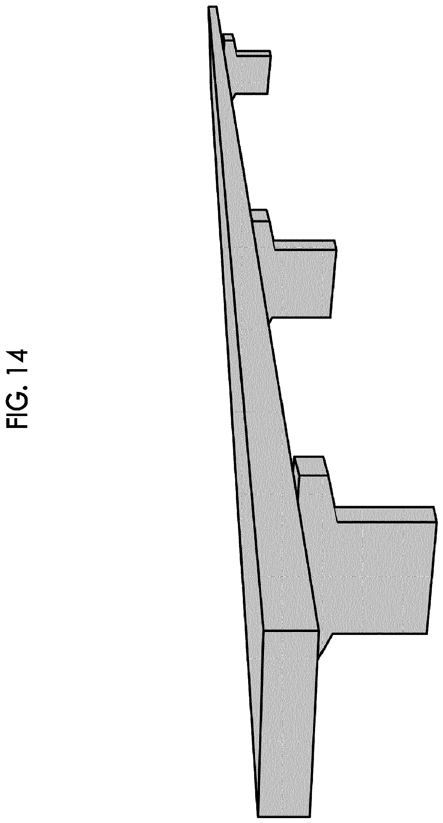

Fig. 14 is a diagram showing an example of a three dimensional model.

Fig. 14 shows an example of a three dimensional model for a bridge. The generated three dimensional model is stored in the auxiliary storage device 14. The three dimensional model is displayed on the display device 16 as necessary.

The coplanar region extraction unit 20C performs a process of extracting regions constituting the same surface of the object from the result of the three dimensional composition processing. Here, the term "same surface" refers to a surface recognized as the same plane in a case where classification is made from the viewpoint of identifying members of the structure.

As an example, in the present embodiment, the coplanar region extraction unit 20C performs a process of estimating a plane by using the point group data acquired in the process of generating the three dimensional model, and extracts regions constituting the same surface. In the process of estimating the plane, the coplanar region extraction unit 20C performs, for example, a process of estimating an approximate plane by using a RANdom SAmple Consensus (RANSAC) method.

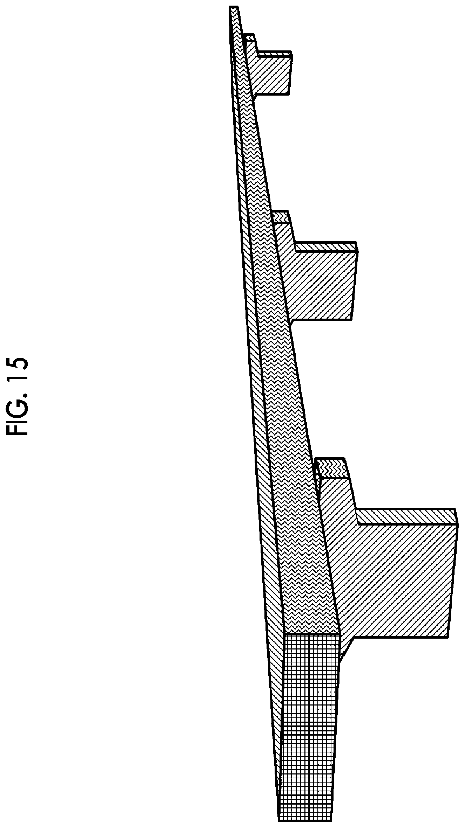

Fig. 15 is a diagram showing an example of an extraction result of the regions constituting the same surface. In Fig. 15, regions extracted as the regions constituting the same surface are given the same pattern.

The identification ID assignment unit 20D performs a process of assigning an identification ID to each image based on an extraction result of the regions constituting the same surface. Specifically, the identification ID assignment unit 20D assigns the same identification ID to the images constituting the extracted regions. Here, the images constituting the extracted regions refers to images used for composition in the regions. Specifically, the images constituting the extracted regions are images used for the texture mapping. As described above, the regions extracted by the coplanar region extraction unit 20C are regions constituting the same surface. Therefore, the same identification ID is assigned to the images constituting the same surface. Since the images constituting the same surface are images obtained by imaging the same surface, the same identification ID is assigned to the images obtained by imaging the same surface.

The identification ID assignment unit 20D generates the identification ID in accordance with a predetermined generation rule, and assigns the identification ID. For example, the identification ID assignment unit 20D configures the identification ID with a four-digit number, and generates the identification ID by incrementing the numbers in order from "0001" to assign the identification ID.

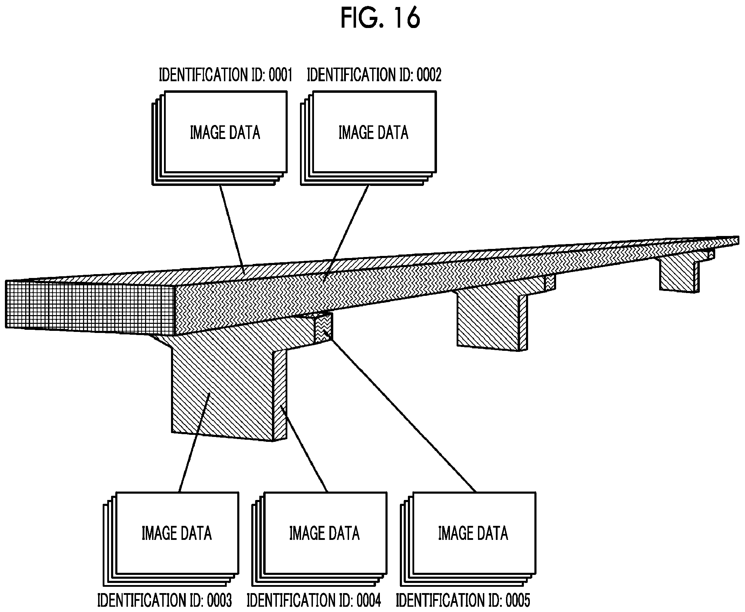

Fig. 16 is a conceptual diagram of the assignment of the identification ID.

As shown in Fig. 16, the same identification ID is assigned to images constituting regions extracted as the regions constituting the same surface. For example, in the example shown in Fig. 16, the identification ID assignment unit 20D assigns an identification ID of 0001 to an image group constituting a pavement (road surface).

As described above, the same identification ID is assigned to the images used for composition. Therefore, an identification ID is not assigned to an image that has not been used for composition. Predetermined information may be assigned to an image that has not been used for composition so that the image can be distinguished from other images.

The identification ID recording control unit 20E attaches the identification ID assigned to each image by the identification ID assignment unit 20D to the image as accessory information (metadata). Specifically, the identification ID recording control unit 20E adds the assigned identification ID to image data of each image as accessory information, and shapes the image data according to a format of an image file.

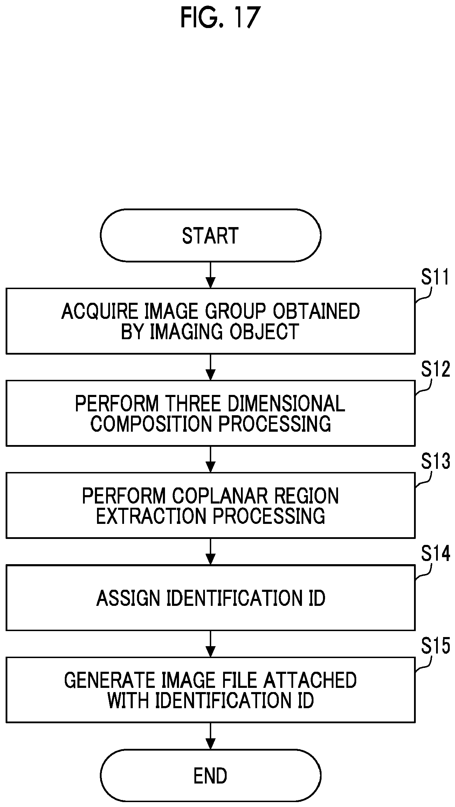

Fig. 17 is a flowchart showing a procedure for processing of generating a three dimensional model, and assigning and recording an identification ID.

First, an image obtained by imaging an object is acquired (step S11). As described above, this image is a multi-view image, and is an image obtained by imaging a target with overlapping imaging ranges from a plurality of viewpoints.

Next, three dimensional composition processing is performed on the acquired image group (step S12). By this process, a three dimensional model of the target is generated (see Fig. 14). The generated three dimensional model is stored in the auxiliary storage device 14.

Next, coplanar region extraction processing is performed based on a result of the three dimensional composition processing (step S13). That is, in the generated three dimensional model, a process of extracting regions constituting the same surface is performed (see Fig. 15).

Next, an identification ID is assigned to each image based on an extraction result of the coplanar region (step S14). That is, the same identification ID is assigned to the images constituting the same surface (see Fig. 16). As a result, the same identification ID is assigned to the images obtained by imaging the same surface.

Next, an image file attached with the assigned identification ID is generated (step S15). That is, the image file including information on the identification ID in the accessory information (metadata) is generated (see Fig. 3). The generated image file is stored in the auxiliary storage device 14.

As described above, according to the inspection support apparatus 20 of the present embodiment, an identification ID is assigned to each image. The identification ID is assigned using the result of the three dimensional composition processing, and the same identification ID is assigned to the images obtained by imaging the same surface. The assigned identification ID is attached to the images as accessory information. Accordingly, it is possible to search for an image using only the accessory information. That is, the inspection support apparatus 20 can extract an image group obtained by imaging a specific surface by using only the accessory information. Thus, in a case where the inspection technician creates a report or the like to which an image is attached, the work can be facilitated.

### [Modification Example]

### [Extraction Processing of Region Constituting Same Surface]

Although it has been described in the aforementioned embodiment that the process of estimating a plane is performed using the point group data to extract regions constituting the same surface, the method of extracting regions constituting the same surface is not limited thereto. For example, a method of recognizing and extracting regions constituting the same surface from a three dimensional model or point group data using a trained model can also be employed.

### [Generation of Identification ID]

Also in this embodiment, the user may input an identification ID to be assigned to an image.

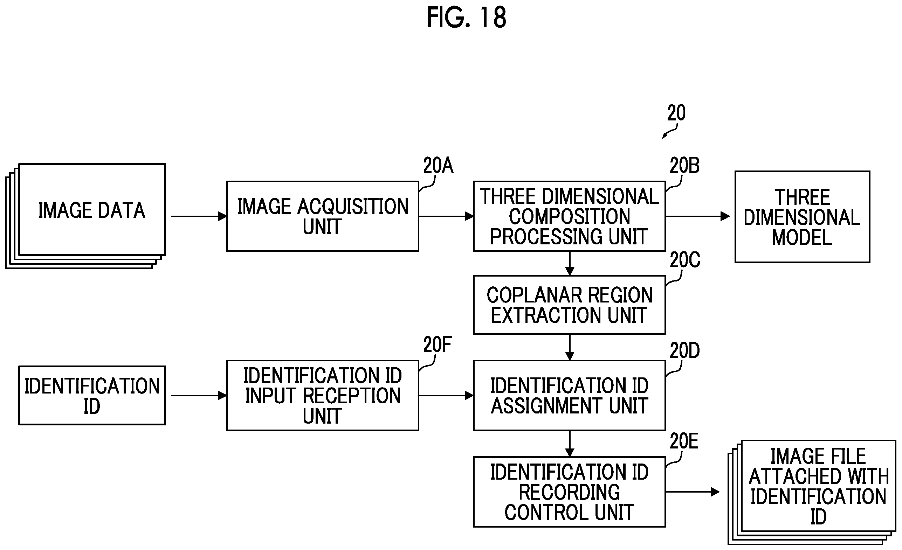

Fig. 18 is a block diagram of main functions of the inspection support apparatus in a case where the user inputs information on an identification ID to be assigned to an image.

As shown in Fig. 18, the inspection support apparatus 20 of the present example further has a function of an identification ID input reception unit 20F. The identification ID input reception unit 20F performs a process of receiving input of the identification ID to be assigned to the image. As an example, the identification ID input reception unit 20F receives input of an identification ID via the display device 16 and the input device 15. Specifically, the inspection support apparatus 20 causes the display device 16 to display the generated three dimensional model, and the identification ID input reception unit 20F receives designation of a region to which the identification ID is assigned on a screen. The designatable region is a region extracted as the regions constituting the same surface. The identification ID input reception unit 20F receives input of an identification ID to be assigned to the designated region from the input device 15. The identification ID input reception unit 20F receives input of an identification ID to be assigned to each region extracted by the coplanar region extraction unit 20C.

### [Information to be Attached to Image]

Also in the present embodiment, information other than the identification ID can be attached to the image. For example, as in the first embodiment, in a case where the image analysis is performed on the image, information on a result of the image analysis may be included in the accessory information and attached.

### [Third Embodiment]

In an inspection support apparatus of the present embodiment, an image group obtained by imaging is subjected to three dimensional composition processing, regions of the same member of an object are extracted from a result of the processing, and the same identification ID is assigned to images constituting the extracted regions.

A hardware configuration is the same as that of the inspection support apparatus of the first embodiment. Therefore, only a function relating to the assignment of the identification ID will be described here.

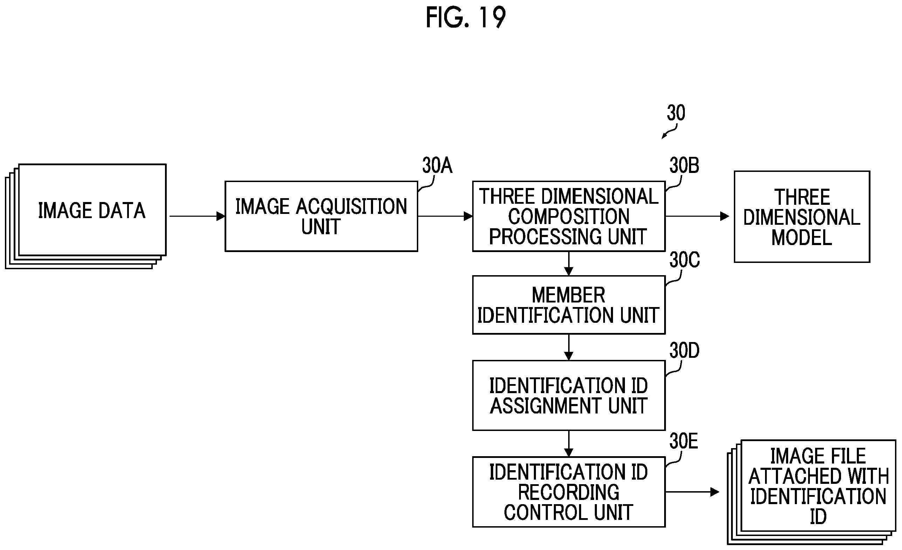

Fig. 19 is a block diagram of main functions of the inspection support apparatus of the present embodiment.

An inspection support apparatus 30 of the present embodiment has functions of an image acquisition unit 30A, a three dimensional composition processing unit 30B, a member identification unit 30C, an identification ID assignment unit 30D, an identification ID recording control unit 30E, and the like. Each function is realized by the CPU executing a predetermined program.

The image acquisition unit 30A performs a process of acquiring an image group obtained by divisionally imaging the structure. A multi-view image obtained by imaging the obj ect with overlapping imaging ranges from a plurality of viewpoints is acquired.

Three dimensional composition processing unit 30B performs a process of generating the three dimensional model of a target by performing three dimensional composition processing using the acquired image group. The function of the three dimensional composition processing unit 30B is the same as that of the second embodiment. Accordingly, a description thereof will be omitted.

The member identification unit 30C performs a process of identifying members constituting the structure from a result of the three dimensional composition processing and extracting regions constituting the same member. As an example, in the present embodiment, the member identification unit 30C performs a process of identifying members from point group data of the object using a trained model. Specifically, the member identification unit 30C identifies members constituting the object by using a trained image recognition model from images (point group projection images) obtained by projecting the point group data of the object from various viewpoints. That is, the member identification unit 30C identifies members such as a main girder, a deck slab, and a bridge pier constituting a bridge. The point group projection image is generated, for example, by projecting the point group data onto a plane from viewpoints at various angles. As the image recognition model, for example, an image segmentation CNN (for example, a SegNet model) can be used, and the image recognition model is trained by using point group data to which member information is assigned as training data. The training data is generated according to a type of the member to be identified or the like.

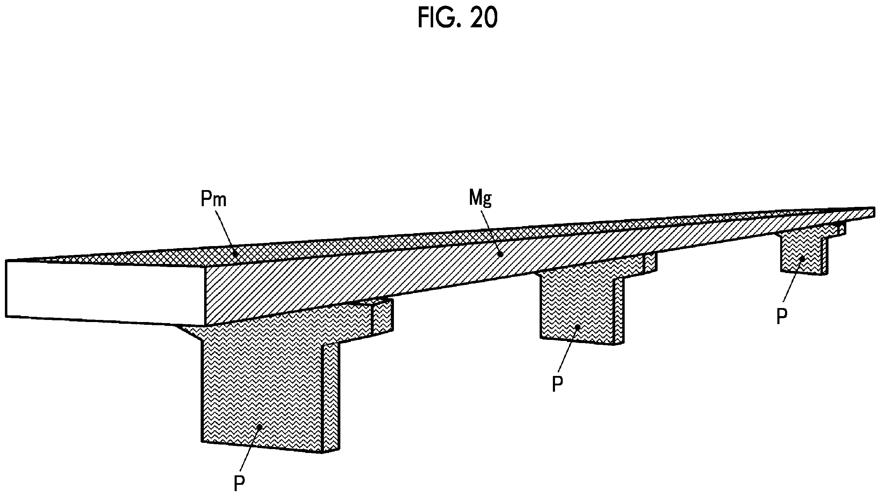

Fig. 20 is a diagram showing an example of an identification result of a member. Fig. 20 shows an example in which a pavement (road surface) Pm, a main girder Mg, and a bridge pier P are identified as members constituting a bridge.

The identification ID assignment unit 30D performs a process of assigning an identification ID to each image based on an identification result of the member. Specifically, the identification ID assignment unit 30D assigns the same identification ID to the images constituting the extracted regions. Here, the images constituting the extracted regions refers to images used for composition in the regions. Specifically, the images constituting the extracted regions are images used for the texture mapping. The regions extracted by the member identification unit 30C are regions constituting the same member. Therefore, the same identification ID is assigned to the images constituting the same member. Since the images constituting the same member are images obtained by imaging the same member, the same identification ID is assigned to the images obtained by imaging the same member.

The identification ID assignment unit 30D generates an identification ID different for each member and assigns the identification ID. For example, the identification ID assignment unit 30D generates an identification ID by combining a symbol for identifying members and a four-digit number, and assigns the identification ID. The symbol for identifying members is used to distinguish different members from each other. The four digit numbers are used to distinguish the same members from each other.

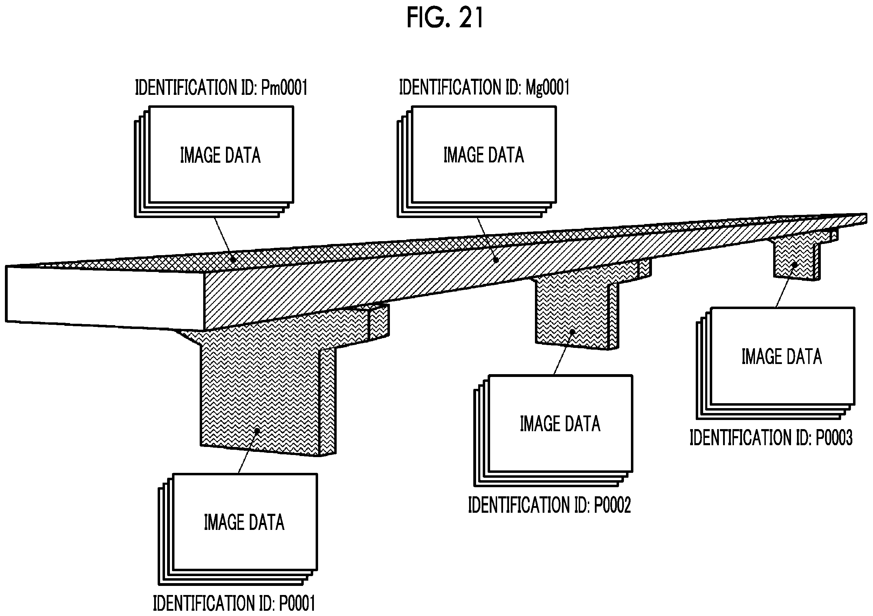

Fig. 21 is a conceptual diagram of assignment of the identification ID. Fig. 21 shows an example in which an identification ID of "Pm0001" is assigned to a pavement (road surface), an identification ID of "Mg0001" is assigned to a main girder, and identification IDs of "P0001", "P0002", and "P0003" are respectively assigned to three bridge piers. The identification ID of the pavement is configured by combining "Pm", which is an identification symbol of the pavement, and a four-digit number. In addition, the identification ID of the main girder is configured by combining "Mg", which is an identification symbol of the main girder, and a four-digit number. The identification ID of the bridge pier is configured by combining "P", which is an identification symbol of the bridge pier, and a four-digit number. As described above, by configuring the identification ID of each member by combining the identification symbols assigned to each member, it is possible to easily perform the subsequent search.

As in the second embodiment, predetermined information is assigned to an image that has not been used for composition so that the image can be distinguished from other images.

The identification ID recording control unit 30E attaches the identification ID assigned to each image by the identification ID assignment unit 30D to the image as accessory information (metadata). Specifically, the identification ID recording control unit 30E adds the assigned identification ID to image data of each image as accessory information, and shapes the image data according to a format of an image file.

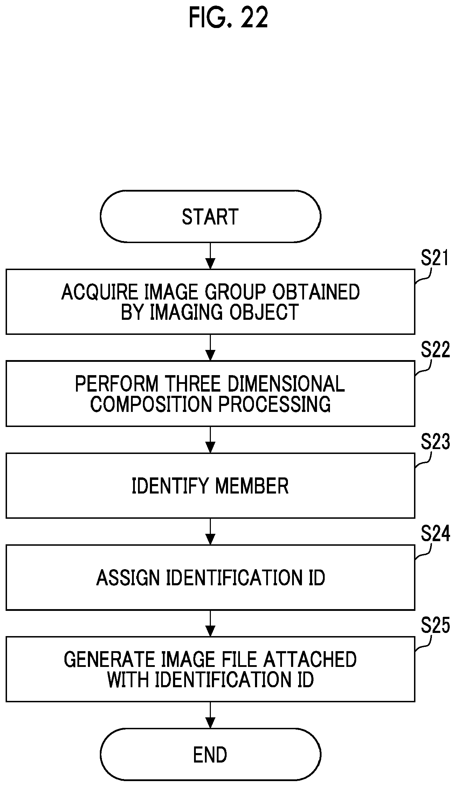

Fig. 22 is a flowchart showing a procedure for processing of generating a three dimensional model, and assigning and recording an identification ID.

First, an image obtained by imaging an object is acquired (step S21). As described above, this image is a multi-view image, and is an image obtained by imaging an object with overlapping imaging ranges from a plurality of viewpoints.

Next, three dimensional composition processing is performed on the acquired image group (step S22). By this process, a three dimensional model of the target is generated (see Fig. 14). The generated three dimensional model is stored in the auxiliary storage device 14.

Next, identification processing of the members is performed based on a result of the three dimensional composition processing (step S23). That is, members are identified in the generated three dimensional model, and regions constituting each member are extracted (see Fig. 20).

Next, an identification ID is assigned to each image based on an identification result of the member (step S24). That is, the same identification ID is assigned to the images constituting the same member (see Fig. 21). As a result, the same identification ID is assigned to the images obtained by imaging the same member.

Next, an image file attached with the assigned identification ID is generated (step S25). That is, the image file including information on the identification ID in the accessory information (metadata) is generated (see Fig. 3). The generated image file is stored in the auxiliary storage device 14.

As described above, according to the inspection support apparatus 30 of the present embodiment, an identification ID is assigned to each image. The identification ID is assigned using the result of the three dimensional composition processing, and the same identification ID is assigned to the images obtained by imaging the same member. The assigned identification ID is attached to the images as accessory information. Accordingly, it is possible to search for an image using only the accessory information. That is, the inspection support apparatus 30 can extract an image group obtained by imaging a specific member by using only the accessory information. Thus, in a case where the inspection technician creates a report or the like to which an image is attached, the work can be facilitated.

### [Modification Example]

### [Identification Processing of Member]

Although it has been described in the aforementioned embodiment that the members are identified from the point group data using a trained model (image recognition model), the method of identifying the members is not limited thereto. The members may be identified from the three dimensional model.

### [Information to be Attached to Image]

Also in the present embodiment, information other than the identification ID can be attached to the image. For example, as in the first embodiment, in a case where the image analysis is performed on the image, information on a result of the image analysis may be included in the accessory information and attached.

### [Other Embodiments]

### [Object or the like]

Although a case where a bridge is a target has been described as an example in the aforementioned embodiment, the application of the present invention is not limited thereto. The same can be similarly applied to other structures.

In the above-described embodiment, a case where an inspection of a structure such as a bridge is supported has been described as an example, but the application of the present invention is not limited thereto. The present invention can also be applied to a technique of supporting various tasks such as diagnosis, repair design, and pre-repair inspection for a structure.

### [Image Data Structure]

The identification ID need only be attached to the image data, and a specific data structure thereof is not particularly limited.

Note that, since the identification ID is used for searching, it is necessary to attach the identification ID to the image data in a searchable state. In particular, a structure that can be searched by commercially available software or the like is preferable.

### [Hardware Configuration]

Hardware that realizes the information processing apparatus can be configured of various processors. The various processors include, for example, a central processing unit (CPU) which is a general-purpose processor that executes a program to function as various processing units, a programmable logic device (PLD) which is a processor whose circuit configuration can be changed after manufacturing such as a field programmable gate array (FPGA), and a dedicated circuitry which is a processor having a circuit configuration specifically designed to execute specific processing such as an application specific integrated circuit (ASIC). One processing unit constituting the inspection support apparatus may be configured of one of the various processors or may be configured of two or more processors of the same type or different types. For example, one processing unit may be configured by a plurality of FPGAs or a combination of a CPU and an FPGA. In addition, the plurality of processing units may be configured of one processor. As an example in which the plurality of processing units are configured of one processor, first, as typified by a computer such as a client or a server, there is a form in which one processor is configured by a combination of one or more CPUs and software and this processor functions as a plurality of processing units. Second, as typified by a system on chip (SoC) or the like, there is a form in which a processor that realizes the functions of the entire system including the plurality of processing units by using one integrated circuit (IC) chip is used. As described above, the various processing units are configured using one or more of the various processors as a hardware structure. Further, the hardware structure of these various processors is more specifically an electric circuit (circuitry) in which circuit elements such as semiconductor elements are combined.

### Explanation of References

1: deck slab
2: panel
3: main girder
4: cross girder
10: inspection support apparatus
10A: image acquisition unit
10B: damage detection unit
10C: panorama composition processing unit
10D: damage diagram generation unit
10E: identification ID assignment unit
10F: identification ID recording control unit
10G: identification ID input reception unit
11: CPU
12: RAM
13: ROM
14: auxiliary storage device
15: input device
16: display device
17: input/output interface
20: inspection support apparatus
20A: image acquisition unit
20B: three dimensional composition processing unit
20B1: point group data generation unit
20B2: three dimensional patch model generation unit
20B3: three dimensional model generation unit
20C: coplanar region extraction unit
20D: identification ID assignment unit
20E: identification ID recording control unit
20F: identification ID input reception unit
30: inspection support apparatus
30A: image acquisition unit
30B: three dimensional composition processing unit
30C: member identification unit
30D: identification ID assignment unit
30E: identification ID recording control unit
D: damage diagram
I: image showing entire panel
i: image
Mg: main girder
P: bridge pier
Pm: pavement (road surface)
S1 to S6: procedure for processing of creating damage diagram, and assigning and recording identification ID
S11 to S15: procedure for processing of generating three dimensional model, and assigning and recording identification ID
S21 to S25: procedure for processing of generating three dimensional model, and assigning and recording identification ID

## Claims

1. An information processing apparatus comprising:
a processor,
wherein the processor
acquires an image group captured with overlapping imaging ranges,
performs composition processing on the acquired image group, and
assigns the same identification information to images of the same imaging target based on a result of the composition processing, and attaches the identification information to the images as accessory information.

2. The information processing apparatus according to claim 1,
wherein the processor
performs panorama composition processing on the acquired image group, and
assigns the same identification information to images constituting a composite region, and attaches the identification information to the images as the accessory information.

3. The information processing apparatus according to claim 2,
wherein the processor further
acquires information on the region, and
assigns information for specifying the region as the identification information.

4. The information processing apparatus according to claim 1,
wherein the processor
performs three dimensional composition processing on the acquired image group,
extracts regions constituting the same surface of an object from a result of the three dimensional composition processing, and
assigns the same identification information to images constituting the extracted regions, and attaches the identification information to the images as the accessory information.

5. The information processing apparatus according to claim 4,
wherein the processor further
acquires information on the region, and
assigns information for specifying the region as the identification information.

6. The information processing apparatus according to claim 1,
wherein the processor
performs three dimensional composition processing on the acquired image group,
extracts regions of the same member of an object from a result of the three dimensional composition processing, and
assigns the same identification information to images constituting the extracted regions, and attaches the identification information to the images as the accessory information.

7. The information processing apparatus according to any one of claims 1 to 6,
wherein the processor further
acquires information on a result of image analysis for the image, and
adds the acquired information on the result of the image analysis to the accessory information to be attached to the image.

8. The information processing apparatus according to claim 7,
wherein the information on the result of the image analysis includes at least one of information on a detection result by the image analysis, information on a type determination result by the image analysis, or information on a measurement result by the image analysis.

9. The information processing apparatus according to claim 8,
wherein the information on the detection result by the image analysis includes at least one of information on a detection result of a defect or information on a detection result of a damage.

10. The information processing apparatus according to claim 8 or 9,
wherein the information on the type determination result by the image analysis includes at least one of information on a defect type determination result or information on a damage type determination result.

11. The information processing apparatus according to any one of claims 8 to 10,
wherein the information on the measurement result by the image analysis includes at least one of information on a measurement result related to a size of a defect, information on a measurement result related to a size of a damage, information on a measurement result related to a shape of the defect, or information on a measurement result related to a shape of the damage.

12. The information processing apparatus according to any one of claims 1 to 11,
wherein the accessory information is used for searching for the image.

13. An information processing method comprising:
acquiring an image group captured with overlapping imaging ranges;
performing composition processing on the acquired image group; and
assigning the same identification information to images of the same imaging target based on a result of the composition processing, and attaching the identification information to the images as accessory information.

14. An information processing program causing a computer to realize:
acquiring an image group captured with overlapping imaging ranges;
performing composition processing on the acquired image group; and
assigning the same identification information to images of the same imaging target based on a result of the composition processing, and attaching the identification information to the images as accessory information.

15. An image data structure comprising:
an image; and
accessory information,
wherein the accessory information includes identification information for identifying an imaging target.

16. The image data structure according to claim 15,
wherein the accessory information further includes information on a result of image analysis for the image.

17. The image data structure according to claim 15 or 16,
wherein the accessory information is used for searching for the image.
